# EUROPEAN PATENT SPECIFICATION

(11) **EP 2 017 317 B1**
(45) Date of publication and mention of the grant of the patent: **12.06.2013**
(21) Application number: 07740552.0
(22) Date of filing: 30.03.2007
(51) Int. Cl.: C09K 3/00, B01J 20/24, B01J 20/26, A62D 3/33, B01D 15/08, C10G 25/00, C08B 37/00

(54) **USE OF SELECTIVE ADSORBENTS FOR HALOGENATED AROMATIC COMPOUNDS CONTAINED IN ORGANIC MEDIA AND METHOD OF CAPTURING OF SAID HALOGENATED AROMATIC COMPOUNDS**
VERWENDUNG SELEKTIVER ADSORBENTIEN FÜR HALOGENIERTE AROMATISCHE VERBINDUNGEN IN ORGANISCHEN MEDIEN UND VERFAHREN ZUM EINFANGEN SOLCHER HALOGENIERTER AROMATISCHER VERBINDUNGEN
UTILISATION DES ADSORBANTS SÉLECTIFS POUR DES COMPOSÉS AROMATIQUES HALOGÉNÉS CONTENUS DANS DES MILIEUX ORGANIQUES ET PROCÉDÉ DE CAPTATION DE CES COMPOSÉS AROMATIQUES HALOGÉNÉS

(30) Priority: 14.04.2006 JP 2006111918
(43) Date of publication of application: 21.01.2009
(73) Proprietor: Osaka University, Suita-shi Osaka 565-0871 (JP)
(72) Inventor: AKASHI, Mitsuru, Suita-shi, Osaka 565-0871 (JP); KIDA, Toshiyuki, Suita-shi, Osaka 565-0871 (JP); KATO, Eiichi, Konan-shi, Shiga 520-3213 (JP); MIYAWAKI, Kazuhiro, Konan-shi, Shiga 520-3213 (JP)
(74) Representative: Vossius & Partner
(86) International application number: PCT/JP2007/057116
(87) International publication number: WO 2007/119614

(56) References cited:
- EP-A1- 0 603 400
- WO-A1-98/28228
- JP-A- 05 031 212
- JP-A- 2003 080 225
- JP-A- 2003 226 737
- JP-A- 2003 226 755
- JP-A- 2005 524 724
- US-A- 4 726 905
- FUGEDI ET AL: "Synthesis of heptakis(6-O-tert-butyldimethylsilyl)cyclo maltoheptaose and octakis(6-O-tert-butyldimethylsilyl)cyclom alto-octaose" CARBOHYDRATE RESEARCH, ELSEVIER SCIENTIFIC PUBLISHING COMPANY. AMSTERDAM, NL, vol. 192, 23 October 1989 (1989-10-23), pages 366-369, XP026622625 ISSN: 0008-6215 [retrieved on 1989-10-23]
- SANYO HAMAI: "Hydrogen Bonding in Inclusion Complexes of Heptakis(2,3,6-tri-O-methyl)-(beta)-cyclod extrin with Chlorophenols in Organic Solvents" BULLETIN OF THE CHEMICAL SOCIETY OF JAPAN, vol. 65, no. 9, September 1992 (1992-09), pages 2323-2327, XP002562185 ISSN: 0009-2673 DOI: 10.1246/bcsj.65.2323
- BENICKA E, TAKACOVA D, KRUPCIK J, SKACANI I, ONUSKA F, TERRY K: "Gas Chromatographic Separation of PCB Atropisomers on Cyclodextrin Stationary Phases" CHIRALITY, vol. 10, no. 6, June 1998 (1998-06), pages 540-547, XP002562186 ISSN: 0899-0042 DOI: 10.1002/(SICI)1520-636X(1998)10:6<540::AID -CHIR7>3.0.CO;2-7
- PANOVA I G, MATUKHINA E V, GERASIMOV V I, TOPCHIEVA I N: "Non-Covalent Columnar Cyclodextrin-Based Structures" COLLOID JOURNAL, vol. 68, no. 1, January 2006 (2006-01), pages 66-78, XP002562187 ISSN: 1061-933X DOI: 10.1134/S1061933X06010091
- RUSA C C, BULLIONS T A, FOX J, PORBENI F E, WANG X, TONELLI A E: "Inclusion Compound Formation with a New Columnar Cyclodextrin Host" LANGMUIR, vol. 18, no. 25, 6 November 2002 (2002-11-06), pages 10016-10023, XP002562188 ISSN: 0743-7463 DOI: 10.1021/la0262452

## Description

The present invention relates to the use of selective adsorbents capable of capturing halogenated aromatic compounds contained in organic media typified by insulating oils, machine oils, heat media, lubricating oils, plasticizers, paints, and inks, as well as mixtures thereof: the invention also relates to a method of selectively capturing halogenated aromatic compounds using such adsorbents.

Halogenated aromatic compounds are compounds that show strong toxicity in humans, as well as plants and animals and for the particular reason of their potential teratogenicity, many of these compounds are designated as harmful substances in the Waste Disposal and Public Cleansing Law. It is strictly specified that if these compounds are contained in the soil, ground water, incinerated ash, cleaning water, machine oils, etc., they must be subjected to certain treatments so that their concentrations are reduced to below threshold values.

Conventionally, organic media such as insulating oils containing halogenated aromatic compounds have been subjected to chemical treatment in their original form (Patent Nos. 2611900 and 3247505). However, in recent years, contamination with halogenated aromatic compounds in very small amounts (about 0.5-100 ppm, in particular, about 0.5-10 ppm) has been found in increasing number of organic media such as insulating oils (virgin or recycled) that are accompanied by documents stating to the effect that they do not contain polychlorobiphenyls (hereinafter abbreviated as PCB) or certificates for the absence of PCB, to say nothing of recycled insulating oils that are not accompanied by such documents or certificates. To treat such large volumes of organic media chemically by conventional methods, huge amounts of time and valuable energy are required, which is a problem from viewpoints of efficiency and economy.

Alternatively, organic media containing halogenated aromatic compounds may be incinerated but in the face of many difficult problems to solve, such as how to prevent the evolution of dioxins, some doubt remains in terms of environmental safety.

With established technologies currently available for treating halogenated aromatic compounds not only in the case where they are contained in small amounts in media but also in the case where they themselves are to be treated, a process for directly treating the halogenated aromatic compounds and media that contain such compounds at high concentrations (1% and more) has started to operate (this process is hereinafter referred to as the "treatment at high concentration") (JP 2003-112034 A).

If, under these circumstances, halogenated aromatic compounds that are contained in very small amounts are enriched by selective adsorption, only those halogenated aromatic compounds can be treated efficiently by the above-described treatment at high concentration and the medium from which the halogenated aromatic compound has been removed finds potential utility as a substance that contains no such compound and, what is more, the space that has been necessary to store the untreated medium can be dispensed with.

JP 5-31212 A discloses a method of capturing organic halogen compounds by forming an inclusion complex of an organic halogen compound with a modified cyclodextrin. However, the method described in JP 5-31212 A involves capturing the organic halogen compound contained in an aqueous solution using the modified cyclodextrin which is hydrophilic and it is difficult to apply this method straightforwardly to organic medium systems since the modified cyclodextrin used in it is not lipophilic.

US 4726905 discloses a method for the removal polychlorinated biphenyl compounds from water using a water insoluble cross-linked cyclodextrin polymer.

EP 0603400 A1 discloses a method of removing halogenated aromatic compounds such as polychlorinated biphenyls (PCBs) from hydrocarbon oil such as transformer oils by bringing the hydrocarbon oil into contact with an alkaline substance such as sodium ethoxide in a solvent such as sulfolane in the presence of β-cyclodextrin. It is supposed in EP 0603400 A1 that the chlorine of the halogenated aromatic compound is dissociated from the initial structure of the aromatic compound, possibly by the action of the alkaline compound.

From this viewpoint, the present inventors made intensive efforts to discover compounds that would be capable of selectively adsorbing the halogenated aromatic compounds in organic media by interacting with them attractively and, as a result, they have developed selective adsorbents that contain those compounds.

It is therefore an object of the present invention to provide a use and a method in which the above-described selective adsorbents are used to selectively capture the halogenated organic compounds contained in organic media.

The two aspects of the present invention and their respective modes are described below.
1. A use of a composition comprising a compound that interacts with the halogenated aromatic compound attractively and which is selected from the group consisting of:
   a cyclic compound selected from the group consisting of a modified cyclodextrin compound represented by the following formula 1: 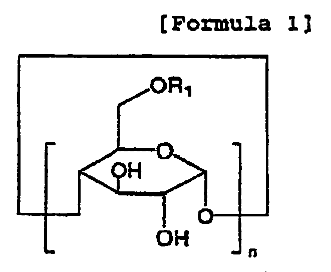 (where R₁ is an alkysilyl group, n is 6, 7, or 8), and a channel type assembly of cyclodextrin for absorbing a halogenated aromatic compound contained in an organic medium.
2. The use as recited in 1 above, wherein the compound that interacts with the halogenated aromatic compound attractively is fixed on a solid carrier.
3. The use as recited in 1 or 2 above, wherein the halogenated aromatic compound is one of dioxins, polychlorobiphenyls, or polychlorobenzenes.
4. The use as recited in any one of 1 to 3 above, wherein the organic medium is selected from the group consisting of insulating oils, heat media, lubricating oils, plasticizers, paints, and inks, as well as mixtures thereof.
5 A method of capturing a halogenated aromatic compound contained in an organic medium, which comprises:
   mixing an organic medium containing the halogenated aromatic compound with a selective adsorbent comprising a composition comprising a compound that interacts with the halogenated aromatic compound attractively and which is selected from the group consisting of:
      a cyclic compound selected from the group consisting of a modified cyclodextrin compound represented by the following formula 1: 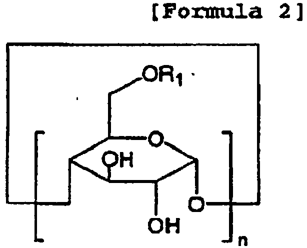 (where R₁ is an alkylsilyl group n is 6, 7, or 8), and a channel type assembly of cyclodextrin, allowing the halogenated aromatic compound in the organic medium to be adsorbed on the compound that interacts with the halogenated aromatic compound attractively;
   then separating from the organic medium the compound that interacts with the halogenated aromatic compound attractively and on which the halogenated aromatic compound has been adsorbed.
6 The method as recited in 5 above, which uses the selective adsorbent in which the compound that interacts with the halogenated aromatic compound attractively is fixed on a solid carrier.
7 The method as recited in 5 or 6 above, wherein the halogenated aromatic compound is one of dioxins, polychlorobiphenyls, or polychlorobenzenes.
8. The method as recited in any one of 5 or 7 above, wherein the organic medium is selected from the group consisting of insulating oils, heat media, lubricating oils, plasticizers, paints, and inks, as well as mixtures thereof.

On the following pages, the present invention is described in detail.

In the present invention, the term "halogenated aromatic compound" refers to all aromatic compounds that are substituted by one or more fluorine, chlorine, bromine, or iodine atoms. In the present invention, it may be exemplified by polychlorobiphenyls (PCB), dioxins, freons, and polychlorobenzenes. PCB collectively refers to those compounds that have the biphenyl skeleton substituted by several chlorine atoms and they occur as a large number of isomers depending on the position and number of chlorine atoms as the substituent. In the narrow sense of the term, "dioxins," refers to the specific compounds that are designated in the Law Concerning Special Measures against Dioxins but in the present invention, it covers all halogenated compounds that are suspected as so-called endocrine disrupters (environmental hormones).

In the present invention, the "organic medium" containing the halogenated aromatic compound is the generic name for a wide range of organic solvents, in particular, those organic solvents that effectively dissolve halogenated aromatic compounds. More specifically and from the viewpoint of utility, the term means insulating oils, machine oils, heat media, lubricating oils, plasticizers, paints, and inks that have a high potential for containing the halogenated aromatic compounds, and it also means mixtures thereof. In the present invention, the "organic medium" may be such that its greater part (say, 60% or more) comprises the above-defined organic medium; it may occasionally contain water but the nature of the organic medium taken as a whole containing the halogenated aromatic compound is not that of an aqueous solution but an organic solution.

A need sometimes arises to decompose halogenated aromatic compounds contained in solid substances (e.g., paper, wood, incinerated ash, rooks, and soil); in this case, the halogenated aromatic compound is extracted from the solid substance and transferred into the organic medium, which is also a candidate for the "organic medium containing the halogenated aromatic compound" that is to be treated by the selective adsorbent of the present invention.

The term "compound that interacts with the halogenated aromatic compound attractively" as used herein refers to all compounds that have cyclic portions, substituents, sequences and the like that interact with the above-mentioned halogenated aromatic compounds attractively (which means "not by a repulsive force") and this compound may be cyclic or acyclic. Hereinafter, the "compound that interacts with the halogenated aromatic compound attractively" is sometimes simply written in an abbreviated form such as an "attractively interacting compound", "interactive compound," or "interacting compound."

In the present invention, the halogenated aromatic compound is "selectively adsorbed" by an interaction only with the halogenated aromatic compound that is dissolved, dispersed or otherwise contained in the organic medium or with the association product of the organic medium's molecule that contains the halogenated aromatic compound in its anterior, to thereby incorporate or fix the same. The term "adsorption" as used herein covers not only chemical binding or adhesion but also all other phenomena including physical adsorption and attraction, as well as a simple state of getting stuck; it does not necessarily mean the halogenated aromatic compound being steadily bonded. Take, for example, the case where the selective immobilizer interacts with the halogenated aromatic compound attractively to be situated at a very close distance for a specified time or the case where the attractive interaction causes the two players to remain in mutual contact for a specified time; either case shall be considered to represent the state of "adsorption" in the broad sense of the term as used herein. To be more specific, the "selective adsorbent" of the present invention means not only such chemicals that the active ingredient contained in the selective adsorbent strongly interacts in an attractive manner with the halogenated aromatic compound contained in the organic medium such that the halogenated aromatic compound is firmly incorporated or fixed within the molecular structure of the active ingredient, but also such chemicals that the above-mentioned active ingredient is in contact, at least temporarily, with the halogenated aromatic compound or that those chemicals can maintain the state where the active ingredient is situated at a very close distance.

Therefore, the selective adsorbent of the present invention comprises a composition that can adsorb the halogenated aromatic compounds by interacting with them attractively. The active ingredient of this composition may be exemplified by a compound that interacts with the halogenated aromatic compound attractively and which is selected from the group consisting of: a cyclic compound selected from the group consisting of a modified cyclodextrin compound represented by the following formula 1: 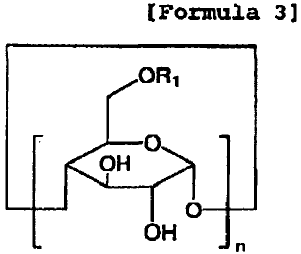 (where R₁ is an amino group, an alkyl group, an alkenyl group, an alkynyl group, a halogen atom, a haloalkyl group, an aryl group, an aralkyl group, an alkoxyalkyl group, a nitro group, an alkanoyl group, an aroyl group, an alkoxycarbonyl group, an arylalkoxycarbonyl group, an alkoxy group, a haloalkoxy group, an aryloxy group, an aralkyloxy group, an alkoxyalkyloxy group, an alkanoyloxy group, an alkoxycarbonyloxy group, an aralkyloxycarbonyloxy group, an alkylsilyl group, or an alkylsilyloxy group; n is 6, 7, or 8), other cyclic oligosaccharides, a supermolecular assembly of cyclodextrin, a crown compound, cyclophane, azacyclophane, thiocyclophane, cryptand, cyclotriveratrylene, cavitand, calilxarene, sipherand, and cyclic oligopeptides; dimers of these cyclic compounds; an acyclic compound selected from the group consisting of acyclic oligosaccharides and acyclic oligopeptides; and mixtures of two or more species of these cyclic compounds and/or these acyclic compounds. The above-mentioned examples of the compound that interacts with the halogenated aromatic compound attractively are each a compound that has in its molecular structure a cyclic portion, a substituent, a sugar sequence, a peptide sequence and the like that can interact with the halogenated aromatic compound attractively and this compound can at least be dispersed in the organic medium. The above-mentioned attractively interacting portion interacts with the halogenated aromatic compound, whereupon the latter is adsorbed in that interactive portion or in its neighborhood. Particularly preferred compounds that interact with the halogenated aromatic compound attractively include:
cyclic compounds such as α-, β-, or γ-cyclodextrin compounds that have the hydroxyl group at 6-position replaced by an alkyl group such as tert-butyl, an alkyl modified aryl group such as triphenylmethyl, or an alkylsilyl group such as tert-butyldimethylsilyl tert-butyldiphenylsilyl or triisopropylsilyl, cyclophane compounds, azacyclophane compounds, thiocyclophane compounds, crown compounds, and calixarene compounds; cyclic and/or acyclic oligosaccharides having a specified sugar sequence; and cyclic and/or acyclic oligopeptides having a specified peptide sequence. Particularly preferred compounds for the purposes of the present invention are α-, β-, or γ-cyclodextrin that is modified by a tert-butyldimethylsilyl group (and which is hereinafter referred to as TBDMS-α-CD, TBDMS-β-CD, or TBDMS-γ-CD), as well as supermolecular assemblies of cyclodextrin.

The supermolecular assembly of cyclodextrin refers to the product of association of several molecules that have assembled spontaneously by a weak interaction between molecules (so-called intermolecular force). An example is the cyclodextrin of a channel type that is described in Inclusion Compound Formation with a New Columnar Cyclodextrin Host, Langmuir 2002, 18, 10016-10023. The channel-type cyclodextrin consists of two or more cyclodextrins that have assembled to form a tube (channel) and because of its characteristic shape, various applications of the channel-type cyclodextrin have been attempted. Finding that the channel-type cyclodextrin is a compound that interacts with the halogenated aromatic compound attractively, the present inventors have come to think of applying this as a selective adsorbent of halogenated aromatic compounds.

The composition to be used as the selective adsorbent of the present invention contains as the active ingredient the aforementioned compound that interacts with the halogenated aromatic compound attractively and, if necessary, it may also contain an auxiliary agent such as a carrier, a base, or a diluent. The active ingredient compound which interacts with the halogenated aromatic compound attractively may optionally be fixed on the carrier or base. In particular, where the active ingredient compound which reacts with the halogenated aromatic compound attractively is of a type that dissolves in the organic medium, it may be fixed on a solid carrier such as silica gel, polymer beads, an ion-exchange resin, glass, a filter, a membrane, a variety of reticular structures or grid structures, a foam, or a porous substance, whereby it can be used as the active ingredient of the selective adsorbent of the present invention. The compound that interacts with the halogenated aromatic compound attractively can be fixed to the carrier or base not only by means of a comparatively strong chemical bond typified by covalent and ionic bonds, but also by a hydrophobic interaction or a physical interaction through a comparatively weak force such as the van der Waals force.

The selective adsorbent of the present invention can selectively adsorb the halogenated aromatic compound in the organic medium and remove it from the latter. Through the use of the selective adsorbent of the present invention, only the halogenated aromatic compounds that require a strict decomposition treatment can be removed and concentrated from organic media that have had no alternative to being stored on account of the halogenated aromatic compounds that are dissolved in them in small quantities; as a result, the efficiency of decomposition of the halogenated aromatic compounds is increased dramatically while at the same time the resulting safe organic media can either be treated by an ordinary method or recycled. The method of using the selective adsorbent of the present invention to capture the halogenated aromatic compound contained in the organic medium is comparatively easy to perform since it simply involves the steps of charging the selective adsorbent into the organic medium, dispersing it, adsorbing the halogenated aromatic compound by stirring or the like, and separating it from the organic medium; this is also a safe method because it can be performed at ordinary temperatures and there is no likelihood for the halogenated aromatic compound to diffuse into the atmosphere. If desired, the compound that interacts with the halogenated aromatic compound attractively may be fixed on a variety of solid carriers and used as the selective adsorbent of the present invention: this enables continuous removal of the halogenated aromatic compound contained in the organic medium.

The method of selectively removing halogenated aromatic compounds from organic media using the selective adsorbent of the present invention is described below specifically.

The organic medium to be used in the present invention which contains halogenated aromatic compounds contains at least one kind of the above-described halogenated aromatic compounds and particularly in the case where the content of the halogenated aromatic compound is about 0.5-1%, the organic medium is described as containing it in "a very small amount", "a small amount", or "at low concentration." A problem with the organic medium that contains the halogenated organic compound at low concentration is that although the quantity of the halogenated aromatic compound to be treated is very small, the volume of the organic medium itself is so large that not only is it difficult to store but at the same time a huge amount of time is required to perform the chemical treatment. Therefore, if the halogenated aromatic compound dissolved in a very small amount can be sufficiently concentrated so that the halogenated aromatic compound to be treated is separated from the recyclable organic medium, then the efficiency of treatment of the halogenated aromatic compound can be enhanced while, at the same time, the aforementioned problem with the storage of the organic medium can be solved.

The above-described organic medium that contains the halogenated aromatic compound, as exemplified by insulating oils, machine oils, heat media, lubricating oils, plasticizers, paints, and ink, as well as mixtures thereof, is put into a reaction vessel. The storage container of those organic media may directly be used as the reaction vessel. Into the reaction vessel, the selective adsorbent of the present invention is also charged and stirred well. The selective adsorbent comprises the compound that interacts with the halogenated aromatic compound attractively and it is contained in an amount 10 to 50 times, preferably 50 to 200 times (on a molar basis), the amount of the halogenated aromatic compound contained in the organic medium. The active ingredient in the selective adsorbent of the present invention, namely, the compound that interacts with the halogenated aromatic compound attractively or the composition that contains this compound is dispersed in the organic medium to have contact with the halogenated aromatic compound contained in it. By the interaction with the attractively interactive moiety of the compound that interacts with the halogenated aromatic compound attractively, the halogenated aromatic compound is adsorbed in that moiety or its neighborhood. Depending on the amount of the organic medium to be treated and the concentration of the halogenated aromatic compound as well as the quantity of the selective adsorbent of the present invention, the contact can generally be realized by agitation or otherwise over a period of five hours to several days. The adsorbing reaction can advantageously be carried out at ordinary temperatures but, if necessary, heating may be done.

After the halogenated aromatic compound contained in the organic medium is thusly adsorbed by the compound that interacts with the halogenated aromatic compound attractively, that attractively interactive compound alone (or the composition that contains it) which has adsorbed the halogenated aromatic compound is separated. For separation, any existing solid-liquid separating technique may be employed, as exemplified by a centrifuge or an apparatus for filtration under pressure. Filtering for separation can be performed using a commercial filter, a glass filter, a membrane, a cotton swab, a metal, a resin, or the like. Any filters or membranes may be used as long as they have pore sizes that permit separation of the inclusion compounds that are contained in the selective adsorbent of the present invention; however, considering the particle size of common interactive compounds, it is preferred to use filters or membranes with pore sizes between about 0.1 and about 100 µm.

After separating the attractively interactive compound that has adsorbed the halogenated aromatic compound, the adsorbed, halogenated aromatic compound is optionally eliminated; the halogenated aromatic compound as adsorbed by the interactive compound or recovered by the eliminating step is optionally diluted and may then be decomposed by a chemical treatment such as chemical extractive decomposition method.

The organic medium that is left behind after separating the attractively interactive compound that has adsorbed the halogenated aromatic compound is substantially completely free of the halogenated aromatic compound. Therefore, the organic media that have heretofore had the need to be stored for the reason that they contain halogenated aromatic compounds can be recycled if they are amenable to recycling or they can alternatively be discarded by an ordinary method such as incineration.

In an advantageous mode of use, the selective adsorbent of the present invention may be such that the active ingredient compound which interacts with the halogenated aromatic compound attractively is fixed on a carrier such as silica gel, polymer beads, an ion-exchange resin, a foam, a film, a membrane, a variety of reticular structures or grid structures, or a porous substance. For example, a solid carrier such as silica gel, polymer beads or an ion-exchange resin that supports the attractively interactive compound of the present invention may be stacked in a column, through which an organic medium containing the halogenated aromatic compound is flowed under atmospheric or some pressure, whereupon an interaction with the attractively interactive compound occurs to enable effective removal of the halogenated aromatic compound contained in the organic medium. Alternatively, a solid carrier such as a filter or a membrane that supports the attractively interactive compound of the present invention is used and an organic medium containing the halogenated aromatic compound is subjected to filtration under atmospheric or reduced pressure, whereupon the halogenated aromatic compound contained in the organic medium is adsorbed on the membrane or filter so that it can be removed. Still alternatively, a solid carrier such as a foam, a reticular structure, a grid structure or a porous substance that supports the attractively interactive compound of the present invention is charged into an organic medium containing the halogenated aromatic compound, so that the organic medium is absorbed in the mesh or grid portions of or the pores in the respective solid carriers, whereupon the halogenated aromatic compound contained in the organic medium is adsorbed; then, pressure is applied to the solid carrier (as by squeezing) to thereby recover the organic medium that is free of the halogenated aromatic compound.

The above-described composition in which the compound of the present invention that interacts with the halogenated aromatic compound in an attractive manner is fixed on the solid carrier can advantageously be used not only in a process where organic media containing halogenated aromatic compounds are freed of the halogenated aromatic compounds batchwise but also in a process where they are treated continuously.
The present invention is described below in greater detail by means of examples, which are given for illustrative purposes only and are in no way intended to limit the scope of the present invention.

### EXAMPLES

### [Synthesis 1] Synthesis of tert-butyldimethylsilylated β-cyclodextrin (THDMS-β-CD)

A 200-mL three-neck flask equipped with a dropping funnel, a three-way cock with a balloon, and a septum was charged with β-cyclodextrin (5.0 g. 4.4 mmol. Wako Pure Chemical Industries, Ltd.) and dry pyridine (44 mL, Wako Pure Chemical Industries, Ltd.) After placing the flask on an ice bath, tert-butyldimethylsilyl chloride (hereinafter abbreviated as TBDMSCl: 6.03 g, 40 mmol, Tokyo Chemical Industry Co., Ltd.) dissolved in dry pyridine (26 mL) was dripped over 2 hours. After the end of dripping, the ice bath was removed and the contents of the flask were stirred at room temperature for 11 hours. After the end of the reaction, the reaction mixture was poured into water (200 mL) and the precipitating white crystal was recovered by filtration. The white crystal was redissolved in dichloromethane and washed with water. The dichloromethane layer was dried with anhydrous sodium sulfate and then the solvent was distilled off. The resulting white crystal was purified on a silica gel column and recrystallized from acetone to isolate TBDMS-β-CD (2.3 g; yield, 27%).

### [Example 1] Selective adsorption of trichlorobenzene contained in an organic medium

The TBDMS-β-CD (18 mg) prepared in Synthesis 1 above was put into a 3 mL sample tube. 1,2,4-Trichlorobenzene (hereinafter abbreviated as TCB; Tokyo Chemical Industry Co., Ltd.) as contained in an amount of 90 ppm in an insulating oil (Taniguchi Petroleum Refining Co., Ltd.; 243 mg together with TCB) was additionally put into the sample tube. The sample tube was fitted on a shaker with a water temperature setting of 25 °C and shaken for 15 hours. Subsequently, the tip of a syringe was plugged with a cotton swab to fabricate a simple separator, into which the solution was flowed. As the piston was pushed, 167 mg of the insulating oil separated out. The concentration of TCB in the insulating oil was measured with GC-2010 (Shimadzu Corporation) by internal standardization (internal standard substance: 2-chlorotoluene) but no TCB was detected.

### [Example 2] Selective adsorption of 1,4-dichlorobenzene contained in an organic medium

The procedure of Example 1 was repeated, except that TCB was replaced by 1,4-dichlorobenzene (hereinafter abbreviated as DCB: Wako Pure Chemical Industries, Ltd.) The insulating oil was obtained in an amount of 175 mg; the concentration of DCB in the insulating oil was measured by gas chromatography but no DCB was detected.

### [Example 3] Selective adsorption of 4-chlorobiphenyl contained in an organic medium

The TBDMS-β-CD (32 mg) prepared in Synthesis 1 above was put into a 3 mL sample tube. 4-Chlorobiphenyl (hereinafter abbreviated as CBP; Tokyo Chemical Industry Co., Ltd.) as contained in an amount of 101 ppm in an insulating oil (Taniguchi Petroleum Refining Co., Ltd.; 233 mg together with CBP) was additionally put into the sample tube. The sample tube was fitted on a shaker with a water temperature setting of 25 °C and shaken for 15 hours. Subsequently, the tip of a syringe was plugged with a cotton swab to fabricate a simple separator, into which the solution was flowed. As the piston was pushed, 177 mg of the insulating oil separated out. The concentration of CBP in the insulating oil was measured with QCMS-QP5050 (Shimadzu Corporation) by selective ion monitoring (SIM) and internal standardization (internal standard substance: 2-chlorotoluene) but no CBP was detected.

### [Synthesis 2] Preparation of channel-type γ-cyclodextrin [0035]

Gamma-cyclodextrin (γ-CD: Whacker) (45 g) put into a 500-mL round-bottom flask was dissolved in deionized water (200 mL) and stirred at 50 °C for 20 hours. The resulting aqueous solution of γ-CD was dripped into vigorously agitated acetone (1.25 L). The precipitating crystal was subjected to suction filtration and the resulting crystal was washed with acetone and air-dried for 3 days: 46.45 g of a channel-type γ-CD was obtained.

### [Example 4] Selective adsorption of 1,2,4-trichlorobenzene contained in an organic medium

The channel-type γ-CD (174 mg) prepared in Synthesis 2 was put into a 3 mL sample tube: thereafter, a 1,2,4-trichlorobenzene (1,2,4-TCB) containing insulating oil (309 mg) that had been adjusted to 100 ppm was additionally put into the sample tube. The sample tube was fitted on a shaker with a water temperature setting of 25 °C and shaken for 24 hours. The solution was then flowed into a syringe, the tip of which had been plugged with a cotton swab. As the piston was pushed, 115 mg of the insulating oil poured out. The concentration of 1,2,4-TCB in the insulating oil was measured by gas chromatography; as it turned out, no 1,2,4-TCB was contained.

### [Example 5] Selective adsorption of 1,3,5-trichlorobenzene contained in an organic medium

The channel-type γ-CD (201 mg) prepared in Synthesis 2 was put into a 3 mL sample tube: thereafter, a 1,3,5-trichlorobenzene (1,3,5-TCB) containing insulating oil (300 mg) that had been adjusted to 100 ppm was additionally put into the sample tube. The sample tube was fitted on a shaker with a water temperature setting of 25 °C and shaken for 39 hours to make a solution. The solution was then flowed into a syringe, the tip of which had been plugged with a cotton swab. As the piston was pushed, 88 mg of the insulating oil poured out. The concentration of 1,3,5-TCB in the insulating oil was measured by gas chromatography; as it turned out, no 1,3,5-TCB was contained.

### [Example 6] Selective adsorption of 4-monochlorobiphenyl contained in an organic medium

The channel-type γ-CD (189 mg) prepared in Synthesis 2 was put into a 3 mL sample tube; thereafter, a 4-monochlorobiphenyl (4-MCBP) containing insulating oil (333 mg) that had been adjusted to 100 ppm was additionally put into the sample tube. The sample tube was fitted on a shaker with a water temperature setting of 25 °C and shaken for 17 hours. The solution was then flowed into a syringe, the tip of which had been plugged with a cotton swab. As the piston was pushed, 91 mg of the insulating oil poured out. The concentration of 4-MCBP in the insulating oil was measured by gas chromatography; as it turned out, no 4-MCBP was contained.

### [Example 7] Selective adsorption of 2-monochlorobiphenyl contained in an organic medium

The channel-type γ-CD (210 mg) prepared in Synthesis 2 was put into a 3 mL sample tube; thereafter, a 2-monochlorobiphenyl (2-MCBP) containing insulating oil (318 mg) that had been adjusted to 100 ppm was additionally put into the sample tube. The sample tube was fitted on a shaker with a water temperature setting of 25 °C and shaken for 42 hours to make a solution. The solution was then flowed into a syringe, the tip of which had been plugged with a cotton swab. As the piston was pushed, 101 mg of the insulating oil poured out. The concentration of 2-MCBP in the insulating oil was measured by gas chromatography; as it turned out, no 2-MCBP was contained.

### [Example 8] Selective adsorption of 4,4'-dichlorobiphenyl contained in an organic medium

The channel-type γ-CD (196 mg) prepared in Synthesis 2 was put into a 3 mL sample tube; thereafter, a 4,4'-dichlorobiphenyl (4,4'-DCBP) containing insulating oil (310 mg) that had been adjusted to 100 ppm was additionally put into the sample tube. The sample tube was fitted on a shaker with a water temperature setting of 25 °C and shaken for 17 hours. The solution was then flowed into a syringe, the tip of which had been plugged with a cotton swab. As the piston was pushed, 82 mg of the insulating oil poured out. The concentration of 4,4'-DCBP in the insulating oil was measured by gas chromatography; as it turned out, no 4,4'-DCBP was contained.

### [Example 9] Selective adsorption of 3,4,4'-trichlorobiphenyl contained in an organic medium

The channel-type γ-CD (199 mg) prepared in Synthesis 2 was put into a 3 mL sample tube; thereafter, a 3,4,4'-trichlorobiphenyl (3,4,4'-TRCBP) containing insulating oil (300 mg) that had been adjusted to 100 ppm was additionally put into the sample tube. The sample tube was fitted on a shaker with a water temperature setting of 25 °C and shaken for 6 hours. The solution was then flowed into a syringe, the tip of which had been plugged with a cotton swab. As the piston was pushed, 88 mg of the insulating oil poured out. The concentration of 3,4,4'-TRCBP in the insulating oil was measured by gas chromatography; as it turned out, no 3,4,4'-TRCBP was contained.

The results of Examples 4 to 9 are summarized in Table 1 below.

**[Table 1]**

| Example | Halogenated aromatic compound | Concentration of Halogenated aromatic compound (before treatment) | amount of insulating oil | Amount of selective adsorbent | Treatment time | Recovery of insulating oil | Concentration of halogenated aromatic compound (after treatment) |
|---|---|---|---|---|---|---|---|
| 4 | 1,2,4-TCB | 100ppm | 309mg | 174mg | 24h | 37% | n.d. |
| 5 | 1,3,5-TCB | 100ppm | 300mg | 201mg | 39h | 29% | n.d. |
| 6 | 4-MCBP | 100ppm | 333mg | 189mg | 17h | 27% | n.d. |
| 7 | 2-MCBP | 100ppm | 318mg | 210mg | 42h | 32% | n.d. |
| 8 | 4,4'-DCBP | 100ppm | 310mg | 196mg | 17h | 26% | n.d. |
| 9 | 3,4,4'-TRCBP | 100ppm | 300mg | 199mg | 6h | 29% | n.d. |

The suppliers of the chemicals used in Examples 4 to 9 are listed below:
1,2,4-trichlorobenzene (Tokyo Chemical Industry Co., Ltd.: purity ≥ 98%) ;
1,3,5-trichlorobenzene (Tokyo Chemical Industry Co., Ltd.; purity ≥ 98%) ;
4-chlorobiphenyl (Tokyo Chemical Industry Co.. Ltd.; purity ≥ 98%);
high-voltage insulating oil (Taniguchi Petroleum Refining Co., Ltd.)

The analyses in the respective Examples were conducted by the following methods:
The TCB, MCBP, and DCBP concentrations were measured by internal standard method; 1,2,4-TCB and 1,3,5-TCB measurements used GC-2010 (SHIMADZU); 4-MCBP, 2-MCBP, 4,4'-DCBP and 3,4,4'-TRCBP measurements used QCMS-QP5050 (SHIMADZU) and were conducted by SIM (selective ion monitoring) with M/Z values of 188, 188, 222, and 256, respectively.

The industries that will benefit from the present invention are those which are required to store organic media, typified by insulating oils, heat media, lubricating oils, plasticizers, paints and inks, that can potentially contain harmful halogenated aromatic compounds such as dioxins and polychlorobiphenyls that cannot be released into the environment without clearing strict regulations, as well as those which are required to store solid substances, typified by paper, wood, incinerated ash, rocks and soil, that can potentially contain those harmful halogenated aromatic compounds; by the present invention, safe and efficient decomposition of those harmful halogenated aromatic compounds and saving of the space for storing those organic media can be realized at the same time.

## Claims

1. Use of a composition comprising a compound that interacts with the halogenated aromatic compound attractively and which is selected from the group consisting of:
a cyclic compound selected from the group consisting of a modified cyclodextrin compound represented by the following formula 1: 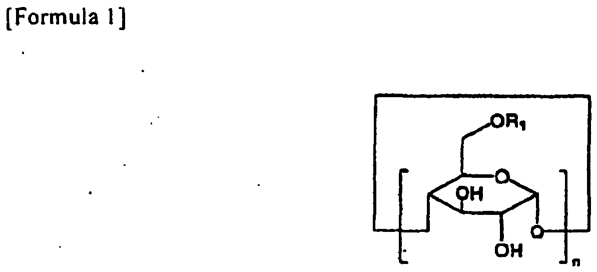 (where R₁ is an alkylsilyl group; n is 6, 7, or 8), and a channel type assembly of cyclodextrin for adsorbing a halogenated aromatic compound contained in an organic medium.

2. The use according to claim 1, wherein the compound that interacts with the halogenated aromatic compound attractively is fixed on a solid carrier.

3. The use according to claim 1 or 2, wherein the halogenated aromatic compound is one of dioxins, polychlorobiphenyls, or polychlorobenzenes.

4. The use according to any one of claims 1 to 3, wherein the organic medium is selected from the group consisting of insulating oils, heat media, lubricating oils, plasticizers, paints, and inks, as well as mixtures thereof.

5. A method of capturing a halogenated aromatic compound contained in an organic medium, which comprises:
mixing an organic medium containing the halogenated aromatic compound with a selective adsorbent comprising a composition comprising a compound that interacts with the halogenated aromatic compound attractively and which is selected from the group consisting of:
a cyclic compound selected from the group consisting of a modified cyclodextrin compound represented by the following formula 1: 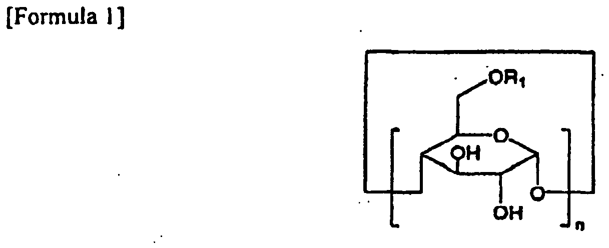 (where R₁ is an alkylsilyl group; n is 6, 7, or 8), and a channel type assembly of cyclodextrin allowing the halogenated aromatic compound in the organic medium to be adsorbed on the compound that interacts with the halogenated aromatic compound attractively;
then separating from the organic medium the compound that interacts with the halogenated aromatic compound attractively on which the halogenated aromatic compound has been adsorbed.

6. The method according to claim 5, which uses the selective adsorbent in which the compound that interacts with the halogenated aromatic compound attractively is fixed on a solid carrier.

7. The method according to claim 5 or 6, wherein the halogenated aromatic compound is one of dioxins, polychlorobiphenyls, or polychlorobenzenes.

8. The method according to any one of claims 5 to 7, wherein the organic medium is selected from the group consisting of insulating oils, heat media, lubricating oils, plasticizers, paints, and inks, as well as mixtures thereof.

## Patentansprüche

1. Verwendung einer Zusammensetzung, umfassend eine Verbindung, welche mit den halogenierten, aromatischen Verbindungen attraktiv wechselwirkt, und welche ausgewählt ist aus der Gruppe, bestehend aus:
einer cyclischen Verbindung, ausgewählt aus der Gruppe, bestehend aus einer modifizierten Cyclodextrinverbindung der folgenden Formel 1: 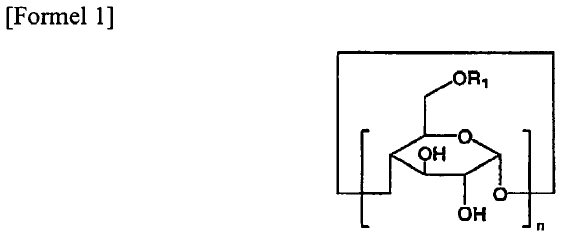 (wobei R₁ ein Alkylsilylrest ist; n die Bedeutung 6, 7 oder 8 hat), und einer kanalartigen Anordnung von Cyclodextrin zum Adsorbieren einer halogenierten, aromatischen Verbindung, enthalten in einem organischen Medium.

2. Die Verwendung nach Anspruch 1, wobei die Verbindung, welche mit der halogenierten, aromatischen Verbindung attraktiv wechselwirkt, auf einem festen Träger fixiert ist.

3. Die Verwendung nach Anspruch 1 oder 2, wobei die halogenierte, aromatische Verbindung eine von Dioxin-, Polychlorbiphenyl- oder Polychlorbenzolverbindungen ist.

4. Die Verwendung nach einem der Ansprüche 1 bis 3, wobei das organische Medium aus der Gruppe, bestehend aus Isolierölen, Wärmeträgern, Schmierölen, Weichmachern, Anstrichen und Tinten, sowie Gemischen davon, ausgewählt ist.

5. Ein Verfahren zum Abfangen einer in einem organischen Medium enthaltenen, halogenierten, aromatischen Verbindung, welches umfasst:
Mischen eines organischen Mediums, enthaltend eine halogenierte, aromatische Verbindung, mit einem selektiven Adsorptionsmittel, umfassend eine Zusammensetzung, welche eine Verbindung umfasst, welche mit der halogenierten,
aromatischen Verbindung attraktiv wechselwirkt, und welche ausgewählt ist aus der Gruppe bestehend aus:
einer cyclischen Verbindung, ausgewählt aus der Gruppe, bestehend aus einer modifizierten Cyclodextrinverbindung der folgenden Formel 1: 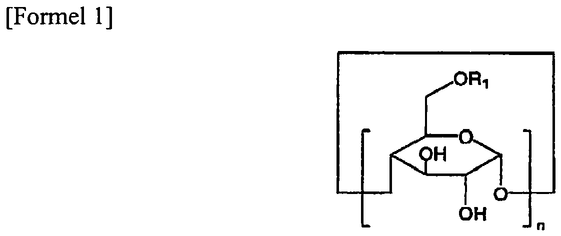 (wobei R₁ ein Alkylsilylrest ist; n die Bedeutung 6, 7 oder 8 hat), und einer kanalartigen Anordnung von Cyclodextrin, welche der halogenierten, aromatischen Verbindung in dem organischen Medium erlaubt, an der Verbindung, welche attraktiv mit der halogenierten, aromatischen Verbindung wechselwirkt, adsorbiert zu werden;
dann Trennen der Verbindung, welche attraktiv mit der halogenierten, aromatischen Verbindung wechselwirkt, an der die halogenierte, aromatische Verbindung adsorbiert wurde, von dem organischen Medium.

6. Das Verfahren nach Anspruch 5, welches das selektive Adsorptionsmittel verwendet, in welchem die Verbindung, welche mit der halogenierten, aromatischen Verbindung attraktiv wechselwirkt, auf einem festen Träger fixiert ist.

7. Das Verfahren nach Anspruch 5 oder 6, wobei die halogenierte, aromatische Verbindung eine von Dioxin-, Polychlorbiphenyl- oder Polychlorbenzolverbindungen ist.

8. Das Verfahren nach einem der Ansprüche 5 bis 7, wobei das organische Medium aus der Gruppe, bestehend aus Isolierölen, Wärmeträgern, Schmierölen, Weichmachern, Anstrichen und Tinten, sowie Gemischen davon, ausgewählt ist.

## Revendications

1. Utilisation d'une composition comprenant un composé qui interagit avec le composé aromatique halogéné de manière attractive et qui est choisi dans le groupe constitué par :
un composé cyclique choisi dans le groupe constitué par un composé cyclodextrine modifié représenté par la formule (1) suivante : 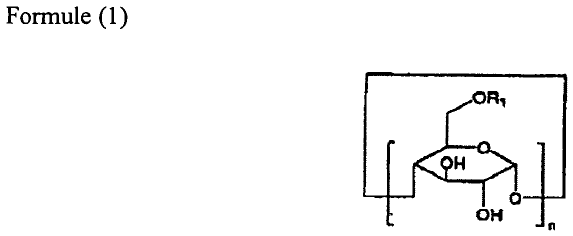 (dans laquelle R₁ est un groupe alkylsilyle ; n est 6, 7 ou 8), et un assemblage de type canal de cyclodextrine pour l'adsorption d'un composé aromatique halogéné contenu dans un milieu organique.

2. Utilisation selon la revendication 1, dans laquelle le composé qui interagit avec le composé aromatique halogéné de manière attractive est fixé sur un support solide.

3. Utilisation selon la revendication 1 ou 2, dans laquelle le composé aromatique halogéné est choisi parmi les dioxines, les polychlorobiphényles ou les polychlorobenzènes.

4. Utilisation selon l'une quelconque des revendications 1 à 3, dans laquelle le milieu organique est choisi dans le groupe constitué par les huiles isolantes, les milieux thermiques, les huiles lubrifiantes, les plastifiants, les peintures et les encres, ainsi que des mélanges de ceux-ci.

5. Procédé de capture d'un composé aromatique halogéné contenu dans un milieu organique, qui comprend :
le mélange d'un milieu organique contenant le composé aromatique halogéné avec un adsorbant sélectif comprenant une composition comprenant un composé qui interagit avec le composé aromatique halogéné de manière attractive et qui est choisi dans le groupe constitué par :
un composé cyclique choisi dans le groupe constitué par un composé cyclodextrine modifié représenté par la formule (1) suivante : 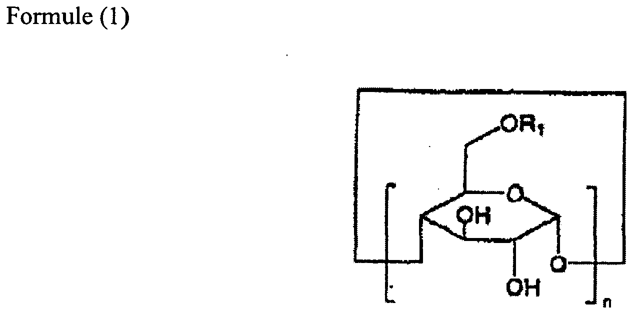
(dans laquelle R₁ est un groupe alkylsilyle ; n est 6, 7 ou 8), et un assemblage de type canal de cyclodextrine permettant au composé aromatique halogéné dans le milieu organique d'être adsorbé sur le composé qui interagit avec le composé aromatique halogéné de manière attractive ;
puis la séparation, à partir du milieu organique, du composé qui interagit avec le composé aromatique halogéné de manière attractive sur lequel le composé aromatique halogéné a été absorbé.

6. Procédé selon la revendication 5, qui utilise l'adsorbant sélectif dans lequel le composé qui interagit avec le composé aromatique halogéné de manière attractive est fixé sur un support solide.

7. Procédé selon la revendication 5 ou 6, dans lequel le composé aromatique halogéné est choisi parmi les dioxines, les polychlorobiphényles ou les polychlorobenzènes.

8. Procédé selon l'une quelconque des revendications 5 à 7, dans lequel le milieu organique est choisi dans le groupe constitué par les huiles isolantes, les milieux thermiques, les huiles lubrifiantes, les plastifiants, les peintures et les encres, ainsi que des mélanges de ceux-ci.
